# EUROPÄISCHE PATENTANMELDUNG

(11) **EP 1 721 661 A1**
(43) Veröffentlichungstag der Anmeldung: **15.11.2006**
(21) Anmeldenummer: 05010325.8
(22) Anmeldetag: 12.05.2005
(51) Int. Cl.: B01J 19/26

(54) **Verfahren zur Herstellung von Polymerpartikeln durch Sprühpolymerisation**

(71) Anmelder: BASF Aktiengesellschaft, 67056 Ludwigshafen (DE)
(72) Erfinder: Seidl, Volker, Dr., 68163 Mannheim (DE); Daiss, Andreas, Dr., 68165 Mannheim (DE)

(57) **Zusammenfassung**

Verfahren zur Herstellung von Polymerpartikeln mit niedrigem Restmonomerengehalt durch Sprühpolymorisation einer Monomerlösung, wobei in einer Flüssigphase und/oder in einer Gasphase über die Dosierung unterschiedlicher flüssiger und/oder gasförmiger Stoffströme gezielt Konzentrationsunterschiede erzeugt werden, sowie Vorrichtungen zur Durchführung des Verfahrens.

## Beschreibung

Die vorliegende Erfindung betrifft ein Verfahren zur Herstellung von Polymerpartikeln mit niedrigem Restmonomerengehalt durch Sprühpolymerisation einer Monomerlösung, wobei in einer Flüssigphase und/oder in einer Gasphase über die Dosierung unterschiedlicher flüssiger und/oder gasförmiger Stoffströme gezielt Konzentrationsunterschiede erzeugt werden, sowie Vorrichtungen zur Durchführung des Verfahrens.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemä-ßen Gegenstandes nicht nur in der jeweils angegebenen Kombination, sondern auch in anderen Kombinationen verwendbar sind, ohne den Rahmen der Erfindung zu verlassen.

US-5,269,980 offenbart ein Verfahren zur Herstellung von Polymerpartikeln durch Sprühpolymerisation, wobei monodisperse Monomerlösungstropfen in einem heißen Gasstrom polymerisiert und getrocknet werden. WO-A-96/40427 beschreibt die Herstellung wasserabsorbierender Polymerpartikel durch Sprühpolymerisation in einer statischen Atmosphäre.

Durch Sprühpolymerisation konnten die Verfahrensschritte Polymerisation und Trocknung zusammengefasst werden. Zusätzlich konnte die Partikelgröße durch geeignete Verfahrensführung in gewissen Grenzen eingestellt werden.

Die Herstellung wasserabsorbierender Polymerpartikel durch Sprühpolymerisation wird beispielsweise auch in den älteren deutschen Patentanmeldungen mit den Aktenzeichen 10340253.5 und 102004024437.5 beschrieben.

EP-A-0 348 180 beschreibt ein Verfahren zur Herstellung wasserabsorbierender Polymerpartikel durch Sprühpolymerisation in einer Wasserdampf enthaltenden Atmosphäre.

EP-A-1 424 346 offenbart ein Sprühpolymerisationsverfahren, bei dem die Polymerisation durch einen Redox-Initiator gestartet wird. Dabei wird eine Monomerlösung, enthaltend ein Reduktionsmittel, zusammen mit einer weiteren Monomerlösung, enthaltend ein Oxidationsmittel, so dosiert, dass sich die Monomerlösungen erst im Reaktor mischen.

Aufgabe der vorliegenden Erfindung war die Optimierung der bekannten Verfahren zur Herstellung von Polymerpartikeln, insbesondere wasserabsorbierenden Polymerpartikeln, durch Sprühpolymerisation.

Eine weitere Aufgabe war die Bereitstellung eines Sprühpolymerisationsverfahrens, dass über längere Zeit störungsfrei betrieben werden kann. Insbesondere sollten Verstopfungen im Düsenbereich vermieden werden.

Weiterhin sollten hohe Umsätze und damit Polymerpartikel mit niedrigem Restmonomerengehalt erhalten werden.

Gelöst wurde die Aufgabe durch ein Verfahren zur Sprühpolymerisation einer Monomerlösung, dadurch gekennzeichnet, dass in einer Flüssigphase und/oder in einer Gasphase über die Dosierung unterschiedlicher flüssiger und/oder gasförmiger Stoffströme gezielt Konzentrationsunterschiede erzeugt werden.

Die Konzentrationsunterschiede in einer Flüssigphase werden beispielsweise erzeugt, indem zwei flüssige Phasen unterschiedlicher Zusammensetzung in Kontakt gebracht werden, so dass möglichst keine Durchmischung stattfindet.

Die Konzentrationsunterschiede in einer Gasphase werden beispielsweise erzeugt, indem zwei Gasströme unterschiedlicher Zusammensetzung räumlich getrennt in den Reaktor dosiert werden.

Die Konzentrationsunterschiede betragen üblicherweise mindestens 10 Gew.-%, vorzugsweise mindestens 20 Gew,-%, besonders bevorzugt mindestens 40 Gew.-%, ganz besonders bevorzugt mindestens 70 Gew.-%, für mindestens eine Substanz und bezogen auf die höhere Konzentration.

Das erfindungsgemäße Verfahren ermöglicht die Herstellung von Polymerpartikeln mit niedrigem Gehalt an Restmonomeren, wobei der Restmonomerengehalt üblicherweise unter 10 Gew.-%, vorzugsweise unter 5 Gew.-%, besonders bevorzugt unter 1 Gew.-%, ganz besonders bevorzugt unter 0,5 Gew.-%, beträgt.

In der Flüssigphase können die Konzentrationsunterschiede erzeugt werden, indem sich zwischen Monomerlösung und Innenwand der Sprühdüse eine laminar strömende Flüssigkeitsschicht ausbildet, wobei die laminar strömende Flüssigkeitsschicht von der Monomerlösung verschieden ist.

Von der Monomerlösung verschieden bedeutet, dass die Flüssigkeit, die die laminar strömende Flüssigkeitsschicht ausbildet, eine andere Zusammensetzung aufweist als die Monomerlösung. Beispielsweise kann die Flüssigkeit ganz oder teilweise Verbindungen enthalten, die keine Komponente der Monomerlösung sind. Es ist aber auch möglich, dass der Flüssigkeit lediglich eine Komponente der Monomerlösung fehlt, beispielsweise der Initiator. Weiterhin ist es möglich, aber weniger bevorzugt, dass die Flüssigkeit die Komponenten der Monomerlösung lediglich in einem anderen Verhältnis enthält.

Die Flüssigkeit, die die laminar strömende Flüssigkeitsschicht zwischen Monomerlösung und Sprühdüse ausbildet, ist vorzugsweise ein in der Monomerlösung enthaltenes Monomer oder besonders bevorzugt ein in der Monomerlösung enthaltenes Lösungsmittel, beispielsweise Wasser.

Eine laminar strömende Flüssigkeitsschicht liegt vor, wenn die climensionslose Dicke der Schicht y⁻ weniger als 10,4 beträgt. Die dimensionslose Dicke der Schicht y⁺ ist der in der Turbulenztheorie definierte dimensionslose Wandabstand und wird beispielsweise in Schlichting, Grenzschichttheorie, Springer-Verlag beschrieben.

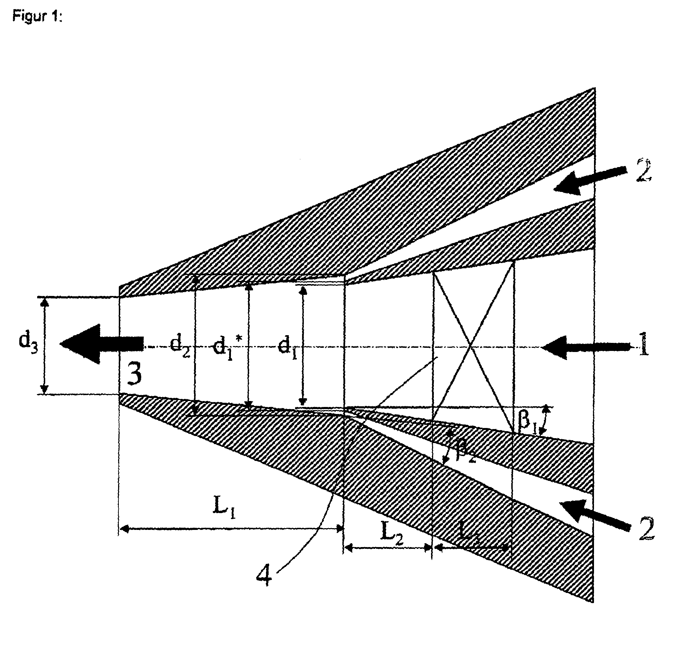

Vorzugsweise wird zur Erzeugung der laminar strömenden Flüssigkeitsschicht (Flüssigkeit 2) zwischen Monomerlösung (Flüssigkeit 1) und Innenwand der Sprühdüse eine Sprühdüse gemäß Figur 1 verwendet. In der Figur 1 haben die Bezugszeichen die folgende Bedeutung:
- 1: Flüssigkeit 1
- 2: Flüssigkeit 2
- 3: Flüssigkeit 1 + 2
- 4: Drallerzeuger (optional)
- d₁: Innendurchmesser der Austrittsöffnung der Flüssigkeit 1
- d₁*: Außendurchmesser der Austrittsöffnung der Flüssigkeit 1
- d₂: Innendurchmesser der, vorzugsweise Koaxialen, Austrittsöffnung der Flüssigkeit 2
- d₃: Innendurchmesser des Düsenmundes
- β₁: Winkel zwischen der konischen Austrittsöffnung der Flüssigkeit 1 und der Düsenhauptachse
- β₂: Winkel zwischen der konischen Zuführung der Flüssigkeit 2 und der konischen Verbindung zum Düsenmund
- L₁: Länge der konischen Verbindung zwischen Düsenmund und den Austrittsöffnungen der Flüssigkeiten 1 und 2
- L₂: Abstand des Drallerzeugers von den Austrittsöffnungen der Flüssigkeiten 1 und 2
- L₃: Länge des Drallerzeugers

Anstelle kreisrunder Querschnitte sind auch beispielsweise elliptische Querschnitte möglich.

Die Geschwindigkeit des Flüssigkeitsstromes 1 beträgt vorzugsweise von 1 bis 150 m/s, besonders bevorzugt von 2 bis 100 m/s, ganz besonders bevorzugt von 4 bis 50 m/s. Durch die konische Verbindung zum Düsenmund wird der Flüssigkeitsstrom weiter beschleunigt. Die Austrittsgeschwindigkeit aus dem Düsenmund beträgt vorzugsweise 1 bis 150 m/s, besonders bevorzugt 2 bis 100 m/s. Das Verhältnis von Länge L₁ der konischen Verbindung zu Innendurchmesser d₂ der, vorzugsweise koaxialen. Austrittsöffnung beträgt vorzugsweise weniger als 40, besonders bevorzugt von 1 bis 20, ganz besonders bevorzugt von 2 bis 10.

Das Massenstromverhältnis von Flüssigkeit 2 zu Flüssigkeit 1 beträgt vorzugsweise bis zu 0,2, besonders bevorzugt von 0,02 bis 0.1.

Das Geschwindigkeitsverhältnis von Flüssigkeit 2 zu Flüssigkeit 1 an den Austrittsöffnungen beträgt vorzugsweise von 0,1 bis 1, besonders bevorzugt von 0,2 bis 1.

Der Winkel **β**₁ zwischen der konischen Austrittsöffnung der Flüssigkeit 1 und der Düsenhauptachse beträgt vorzugsweise weniger als 30°, besonders bevorzugt weniger als 15°, ganz besonders bevorzugt weniger als 10°.

Der Winkel β₂ zwischen der konischen Zuführung der Flüssigkeit 2 und der konischen Verbindung zum Düsenmund beträgt vorzugsweise weniger als 45°, besonders bevorzugt weniger als 30°, ganz besonders bevorzugt weniger als 15°.

Vorteilhaft wird eine erfindungsgemäße Düse mit Drallerzeuger verwendet. Über die Auswahl des Drallerzeugers können Tropfengröße und Sprühwinkel zusätzlich beeinflußt werden, wobei eine stärkere Verdrallung zu kleineren Tropfen und vergrö-ßertem Sprühwinkel führen.

Niedrige Umsätze und damit hohe Restmonomerengehalte durch zu schnelle Trocknung der Monomerlösungstropfen können bereits durch geringe Lösungsmittelmengen, die gezielt zugesetzt werden, vermieden werden. Eine Verdünnung der gesamten Monomerlüsung ist nicht erforderlich.

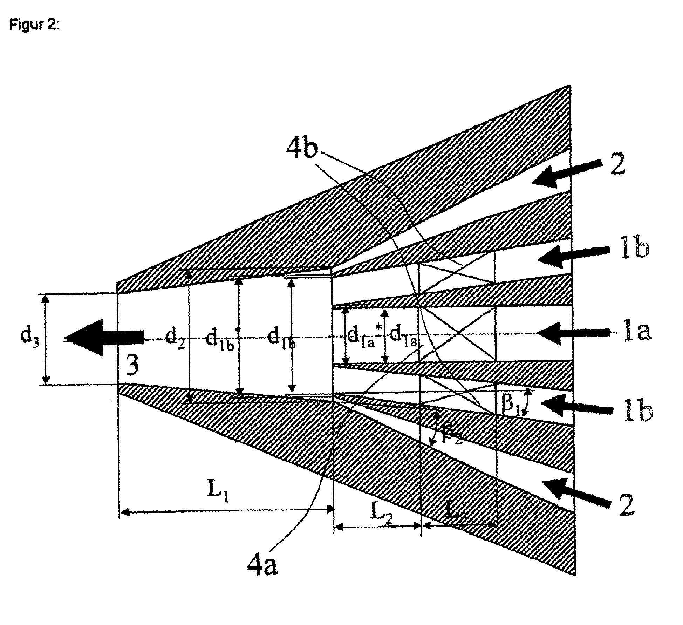

In einer besonders bevorzugten Ausführungsform wird zur Erzeugung der laminar strömenden Flüssigkeitsschicht (Flüssigkeit 2) zwischen Monomerlösung (Flüssigkeit 1a und 1b) und Innenwand der Sprühdüse eine Vorrichtung gemäß Figur 2 verwendet. In der Figur 2 haben die Bezugszeichen die folgende Bedeutung:
- 1a: Flüssigkeit 1a
- 1b: Flüssigkeit 1b
- 2: Flüssigkeit 2
- 3: Flüssigkeit 1a + 1b + 2
- 4a: Drallerzeuger (optional)
- 4b: Drallerzeuger (optional)
- d₁ₐ: Innendurchmesser der Austrittsöffnung der Flüssigkeit 1 a
- d₁ₐ*: Außendurchmesser der Austrittsöffnung der Flüssigkeit 1 a
- d_{1b}: Innendurchmesser der, vorzugsweise koaxialen, Austrittsöffnung der Flüssigkeit 1 b
- d_{1b}*: Außendurchmesser der, vorzugsweise Koaxialen, Austrittsöffnung der Flüssigkeit 1b
- d₂: Innendurchmesser der, vorzugsweise koaxialen, Austrittsöffnung der Flüssigkeit 2
- d₃: Innendurchmesser des Düsenmundes
- β₁: Winkel zwischen der konischen Austrittsöffnung der Flüssigkeit 1 und der Düsenhauptachse
- β₂: Winkel zwischen der konischen Zuführung der Flüssigkeit 2 und der konischen Verbindung zum Düsenmund
- L₁: Länge der konischen Verbindung zwischen Düsenmund und den Austrittsöffnungen der Flüssigkeiten 1a, 1 b und 2
- L₂: Abstand des Drallerzeugers von den Austrittsöffnungen der Flüssigkeiten 1a, 1b und 2
- L₃: Länge des Drallerzeugers

Anstelle kreisrunder Querschnitte sind auch beispielsweise elliptische Querschnitte möglich.

Die Geschwindigkeit des Flüssigkeitsstromes 1 a beträgt vorzugsweise von 1 bis 150 m/s, besonders bevorzugt von 2 bis 100 m/s, ganz besonders bevorzugt von 4 bis 50 m/s. Die Geschwindigkeit des Flüssigkeitsstromes 1 b beträgt vorzugsweise von 1 bis 150 m/s, besonders bevorzugt von 2 bis 100 m/s, ganz besonders bevorzugt von 4 bis 50 m/s. Durch die konische Verbindung zum Düsenmund werden der Flüssigkeitsströme weiter beschleunigt. Die Austrittsgeschwindigkeit aus dem Düsenmund beträgt vorzugsweise 1 bis 100 m/s, besonders bevorzugt 2 bis 50 m/s. Das Verhältnis von Länge L₁ der konischen Verbindung zu Innendurchmesser d₂ der, vorzugsweise koaxialen, Austrittsöffnung beträgt vorzugsweise weniger als 40, besonders bevorzugt von 1 bis 20, ganz besonders bevorzugt von 2 bis 10.

Das Massenstromverhältnis von Flüssigkeit 2 zur Summe der Flüssigkeiten 1a und 1b beträgt vorzugsweise weniger als 0,2, besonders bevorzugt von 0,02 bis 0,1. Das Massenstromverhältnis von Flüssigkeit 1b zu Flüssigkeit 1 a beträgt vorzugsweise von 0,25 bis 4, besonders bevorzugt von 0,5 bis 2.

Das Geschwindigkeitsverhältnis von Flüssigkeit 2 zu Flüssigkeit 1 a an den Austrittsöffnungen beträgt vorzugsweise von 0,1 bis 1, besonders bevorzugt von 0,2 bis 1. Das Geschwindigkeitsverhältnis von Flüssigkeit 2 zu Flüssigkeit 1b an den Austrittsöffnungen beträgt vorzugsweise von 0,1 bis 1, besonders bevorzugt von 0,2 bis 1.

Das Verhältnis von Wandstärke (d₁ₐ* - d₁ₐ) der Austrittsöffnung der Flüssigkeit 1a zu Spaltbreite der Austrittsöffnung (d_{1b} - d₁ₐ*) der Flüssigkeit 1 b beträgt vorzugsweise weniger als 1, besonders bevorzugt weniger als 0,5, ganz besonders bevorzugt weniger als 0,2.

Das Verhältnis von Wandstärke (d_{1b}* - d_{1b}) der Austrittsöffnung der Flüssigkeit 1 b zu Spaltbreite der Austrittsöffnung (d₂ - d_{1b}*) der Flüssigkeit 2 beträgt vorzugsweise weniger als 1, besonders bevorzugt weniger als 0.5, ganz besonders bevorzugt weniger als 0,2.

Der Winkel β₁ zwischen der konischen Austrittsöffnung der Flüssigkeit 1 und der Düsenhauptachse beträgt vorzugsweise weniger als 30°, besonders bevorzugt weniger als 15°, ganz besonders bevorzugt weniger als 10°.

Der Winkel β₂ zwischen der konischen Zuführung der Flüssigkeit 2 und der konischen Verbindung zum Düsenmund beträgt vorzugsweise weniger als 45°, besonders bevorzugt weniger als 30°, ganz besonders bevorzugt weniger als 15°.

Vorteilhaft wird eine erfindungsgemäße Düse mit Drallerzeuger verwendet. Über die Auswahl des Drallerzeugers können Tropfengröße und Sprühwinkel zusätzlich beeinflußt werden, wobei eine stärkere Verdrallung zu kleineren Tropfen und vergrö-ßertem Sprühwinkel führen. Zusätzlich unterstützt der Drallerzeuger die Mischung der Flüssigkeitsströme 1a und 1b.

Besonders bevorzugt erzeugen die Drallerzeuger der Flüssigkeiten 1a und 1b einen gegensinnigen Drall, wodurch die beiden Flüssigkeitsströme besser durchmischt werden.

Das Verhältnis von Abstand L₂ des Drallerzeugers von den Austrittsöffnungen der Flüssigkeiten 1a, 1b und 2 zu Innendurchmesser d₁ₐ der Austrittsöffnung der Flüssigkeit 1a beträgt vorzugsweise weniger als 10, besonders bevorzugt bis zu 5, ganz besonders bevorzugt bis zu 2. Das Verhältnis von Länge L₃ des Drallerzeugers zu Innendurchmesser d₁ₐ der Austrittsöffnung der Flüssigkeit 1a beträgt vorzugsweise weniger als 5, besonders bevorzugt von 0,25 bis 3, ganz besonders bevorzugt von 0,5 bis 2.

Die Flüssigkeitsströme 1a und 1b können Monomerlösungen sein, wobei wobei die eine Monomerlösung einen Initiator und die andere Monomerlösung einen Co-Initiator enthält.

Das erfindungsgemäße Verfahren ist besonders gut für radikalische Polymerisationen geeignet, insbesondere für Polymerisationen, die durch Redox-Initiatoren gestartet werden.

Bei der Redox-Polymerisation setzt die Polymerisation spontan ein. Daher wird zumindest die zweite Komponente des Redox-Initiators (üblicherweise das Reduktionsmittel) so spät wie möglich zugesetzt. In dem erfindungsgemäßen Verfahren geschieht dies, indem die Mvnomerlösung in zwei Teillösungen (FlüssigKeitsströme 1 a und 1 b) aufgeteilt wird, wobei die eine Teillösung das Oxidationsmittel und die andere Teillösung das Reduktionsmittel des Redox-Initiators enthält. Die Teillösungen werden im Bereich der Mischstrecke zwischen den Austrittsöffnungen der Flüssigkeitsströme 1 a und 1 b und dem Düsenmund vermischt. Dies wird durch die Drallerzeuger zusätzlich unterstützt.

Zusätzlich zu den obengenannten Vorteilen vermindert der laminar strömende Flüssigkeitsstrom 2 hierbei den Kontakt der polymerisationsfähigen Monomerlösung mit der Düsenwand. Dadurch wird die Verstopfungsneigung der erfindungsgemäßen Sprühdüse vermindert und die Laufzeit erhöht.

Selbstverständlich besteht auch die Möglichkeit mit der erfindungsgemäßen Sprühdüse beliebige Vorstufen der Monomerlösung in der erfindungsgemäßen Sprühdüse zu mischen. Beispielsweise kann eine teilneutratisierte wässrige Acrylsäurelösung polymerisiert werden indem in der Sprühdüse die beiden Flüssigkeitsströme 1a und 1 b vermischt werden, wobei beispielsweise einer der Flüssigkeitsströme 1a oder 1b die Acrylsäure und den Initiator und der andere Flüssigkeitsstrom die zur Teilneutralisation notwendige Natronlauge enthält. Hierbei kann die Neutralisationswärme zur Erwärmung der Monomeriösung genutzt werden, ohne das die Gefahr besteht, dass die Sprühdüse verstopft.

In der Gasphase können die Konzentrationsunterschiede erzeugt werden, indem mindestens zwei Gasströme unterschiedlicher Zusammensetzung in den Reaktionsraum eingeleitet werden.

In einer besonderen Ausführungsform wird die Monomerlösung mittels einer Zweistoffdüse versprüht, wobei einer der mindestens zwei Gasströme als Zerstäubergas verwendet wird.

Vorzugsweise werden die mindestens zwei Gasströme unterschiedlicher Zusammensetzung im Bereich der Sprühdüse an einer Durchmischung gehindert.

Bevorzugt werden die Tropfen der Monomerlösung und die Gasströme unterschiedlicher Zusammensetzung im Gleichstrom von oben nach unten durch den Reaktor geführt.

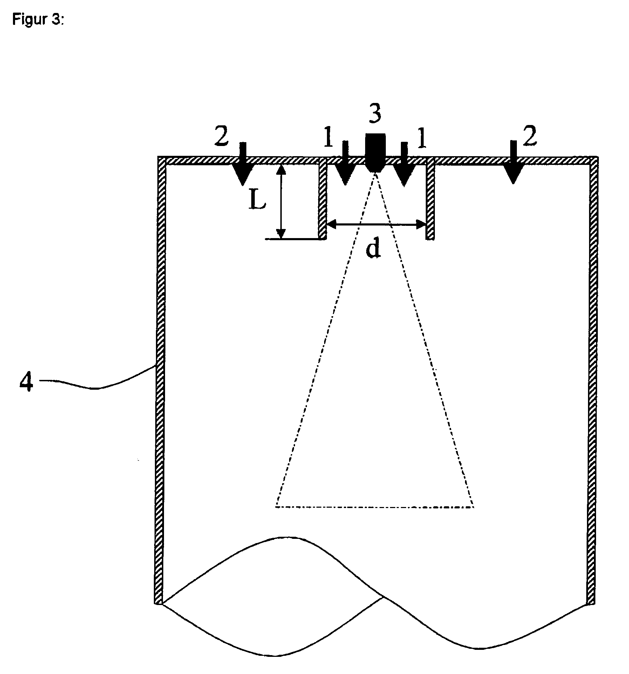

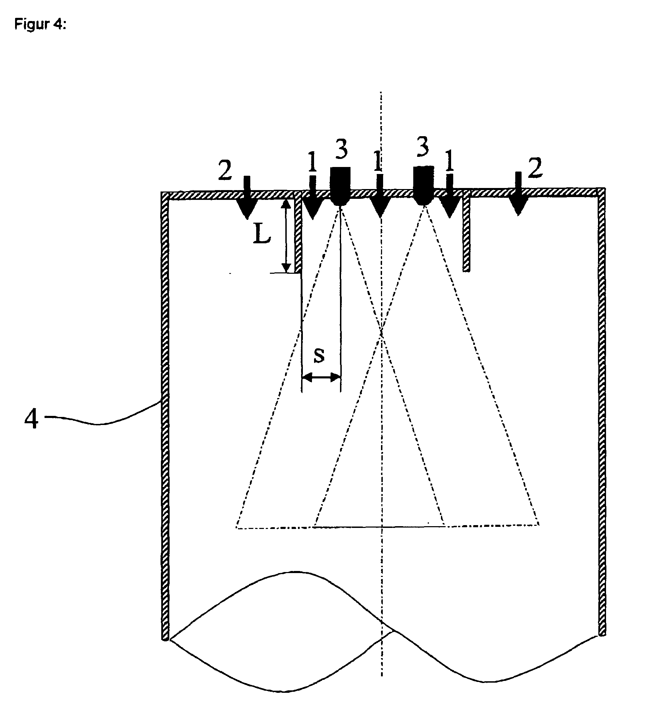

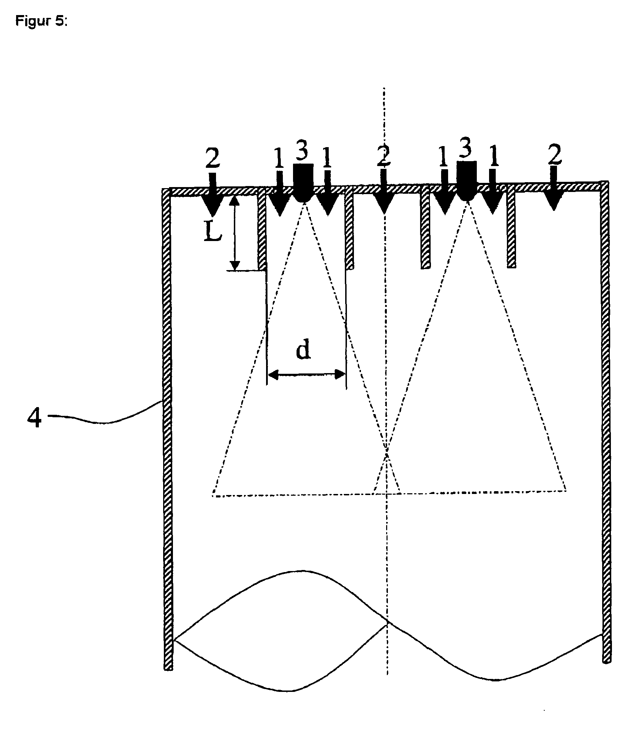

Für das erfindungsgemäße Verfahren geeignete Reaktoren sind in den Figuren 3 bis 6 dargestellt. Hierbei haben die Bezugszeichen die folgende Bedeutung:
- 1: Gaszuführung 1
- 2: Gaszuführung 2
- 3: Sprühdüse
- 4: Reaktorwand
- L: Tiefe der Leitbleche
- s: Abstand des Leitblechs zur Sprühdüse
- d: Abstand der Leitbleche
- α: Winkel zwischen der Gaszuführung 1 und der Senkrechten
- β: Sprühwinkel der Gaszuführung 1

Figur 3 zeigt einen Reaktor mit einer Sprühdüse und Leitblechen neben der Sprühdüse, wobei die Gasströme 1 und 2 im Bereich der Sprühdüse durch die Leitbleche an einer Vermischung gehindert werden.

Figur 4 zeigt einen Reaktor mit zwei Sprühdüsen und Leitblechen neben den Sprühdüsen, wobei die Gasströme 1 und 2 im Bereich der Sprühdüsen durch die Leitbleche an einer Vermischung gehindert werden.

Figur 5 zeigt einen Reaktor mit zwei Sprühdüsen und Leitblechen neben den Sprühdüsen, wobei die Gasströme 1 und 2 im Bereich der Sprühdüsen durch die Leitbleche an einer Vermischung gehindert werden, und wobei jede Sprühdüse einzeln von Leitblechen umgeben ist.

Figur 6 zeigt einen Reaktor mit einer Sprühdüse und Leitblechen neben der Sprühdüse, wobei die Gasströme 1 und 2 im Bereich der Sprühdüse durch die Leitbleche an einer Vermischung gehindert werden, und wobei die Gaszuführungen der Gasströme 1 gegenüber der Senkrechten zur Sprühachse geneigt sind, vorzugsweise um weniger als 45°, besonders bevorzugt um weniger als 30°, ganz besonders bevorzugt um weniger als 15°.

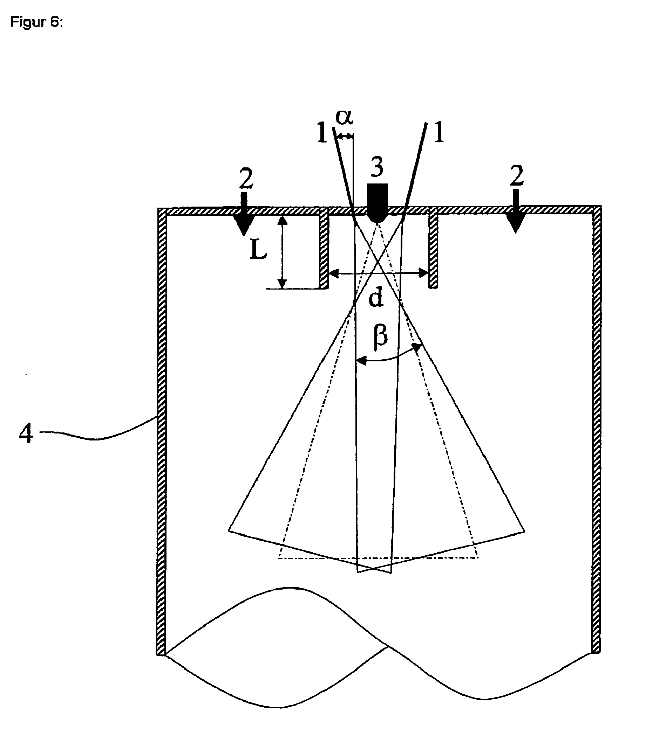

In dem Reaktor gemäß Figur 6 kann der Konzentrationsunterschied in der Gasphase auch eingestellt werden, indem statt des Gasstromes 1 ein Flüssigkeitsstrom in den Reaktor verdüst wird, wobei der verdüste Flüssigkeitsstrom verdampft und dadurch der Gasstrom 1 im Reaktor erzeugt wird.

Das Verhältnis von Tiefe der Leitbleche L zu Abstand der Leitbleche von der Sprühdüse s beträgt vorzugsweise weniger als 3, besonders bevorzugt weniger als 2,4, ganz besonders bevorzugt weniger als 1,8. Wird jede Sprühdüse einzeln von Leitblechen umgeben, so ist Abstand d der Leitbleche gleich dem doppelten Abstand s der Leitbleche zur Sprühdüse.

Die Leitbleche weisen vorzugsweise keine seitlichen Öffnungen auf und umschließen die Sprühdüse bzw. die Sprühdüsen vollständig.

Die Anzahl der Gaszuführungen und/oder der Sprühdüsen ist nicht auf die in den Figuren 3 bis 6 dargestellte Anzahl beschränkt, vielmehr ist es insbesondere bei größeren Reaktoren zweckmäßig die Anzahl der Gaszuführungen und/oder Sprühdüsen zu erhöhen.

Das Massenstromverhältnis von Gasstrom 2 zu Monomerlösung beträgt vorzugsweise von 5 bis 100, besonders bevorzugt von 10 bis 50, ganz besonders bevorzugt 15 bis 25.

Das Massenstromverhältnis von Gasstrom 1 zu Monomerlösung beträgt vorzugsweise von 0,5 bis 10, besonders bevorzugt von 1 bis 5, ganz besonders bevorzugt 2 bis 4.

Das Verhältnis der Gasgeschwindigkeit des Gasstromes 1 zu der Gasgeschwindigkeit des Gasstromes 2 beträgt vorzugsweise von 0,25 bis 4, besonders bevorzugt von 0,5 bis 2, ganz besonders bevorzugt 0,75 bis 1,5.

Die Gasgeschwindigkeit des Gasstromes 2 beträgt vorzugsweise 0,05 bis 5 m/s, besonders bevorzugt von 0,1 bis 1 m/s, ganz besonders bevorzugt von 0,25 bis 0,75 m/s.

Der Sprühwinkel β beträgt vorzugsweise von 10 bis 90°, besonders bevorzugt von 10 bis 70°, ganz besonders bevorzugt von 10 bis 30°.

Statt der in den Figuren 3 bis 6 dargestellten Sprühdüsen können in dem erfindungsgemäßen Verfahren auch Vertropfer eingesetzt werden.

Mindestens ein Gasstrom der mindestens zwei Gasströme unterschiedlicher Zusammensetzung enthält vorzugsweise eine Komponente der Monomerlösung flüssig und/oder besonders bevorzugt gasförmig. Es ist aber auch möglich, dass der Gasstrom, der eine Komponente der Monomerlösung flüssig enthält, nur aus dieser flüssigen Komponente besteht. In diesem Fall wird der Gasstrom durch Verdampfung der flüssigen Komponente, beispielsweise Wasser, im Reaktor erzeugt.

Vorzugsweise wird die versprühte Monomerlösung von dem Gasstrom, der die mindestens eine Komponente der Monomerlösung enthält, umhüllt, beispielsweise indem der Gasstrom nahe der Sprühdüse in den Reaktionsraum geführt wird. Die Temperatur des umhüllenden Gasstromes beträgt vorzugsweise von 70 bis 150°C, besonders bevorzugt von 90 bis 130°C, ganz besonders bevorzugt von 100 bis 110°C. Die Temperatur des weiteren Gasstromes beträgt vorzugsweise von 70 bis 250°C, besonders bevorzugt 100 bis 200°C, ganz besonders bevorzugt 120 bis 180°C

Ist Wasser ein Bestandteil der Monomerlösung, so ist Wasserdampf die bevorzugte Komponente der Monomerlösung in dem mindestens einen Gasstrom, wobei die relative Feuchte des Gasstromes vorzugsweise mindestens 50%, besonders bevorzugt mindestens 75%, ganz besonders bevorzugt mindestens 95%, beträgt.

Die relative Feuchte ist der Quotient aus Wasserdampfpartialdruck und Wasserdampfdruck (Sättigung) bei einer gegebenen Temperatur multipliziert mit 100%.

Die erfindungsgemäße Verwendung zweier Gasströme unterschiedlicher Zusammensetzung ermöglicht Polymerisation und Trocknung bei der Sprühpolymerisation zu entkoppeln. Wird beispielsweise eine wässrige Monomerlösung polymerisiert, so hat der Gasstrom 1 (Befeuchtungsgas) vorzugsweise einen hohen Wasserdampfanteil und eine niedrige Temperatur und der Gasstrom 2 (Trocknungsgas) vorzugsweise einen niedrigen Wasserdampfanteil und eine hohe Temperatur.

Dabei verhindert das Befeuchtungsgas am Reaktoreingang ein zu schnelles Trocknen während der Polymerisationsphase und damit einen Reaktionsabbruch bei niedrigem Umsatz und hohem Restmonomerengehalt. Am Reaktorausgang werden die Polymerpartikel durch das Trocknungsgas getrocknet.

Weiterhin kann der Gasstrom 1 genutzt werden um die versprühte Monomerlösung zu erwärmen. Hat beispielsweise der Gasstrom 1 (Befeuchtungsgas) eine hohe relative Feuchte und wird die Monomerlösung mit ca. 25°C zugeführt, so kann Wasser auf den Tropfen kondensieren und die Kondensationswärme übertragen.

Die Reaktion wird vorzugsweise in Apparaten durchgeführt, die auch für die Sprühtrocknung geeignet sind. Derartige Reaktoren werden beispielsweise in K. Masters, Spray Drying Handbook, 5th Edition, Longman, 1991, Seiten 23 bis 66, beschrieben und können für das erfindungsgemäße Verfahren angepasst werden.

Im erfindungsgemäßen Verfahren können eine oder mehrere Sprühdüsen eingesetzt werden. Für die erfindungsgemäßen Sprühdüsen gelten die obengenannten bevorzugten Parameter. Ansonsten unterliegen die einsetzbaren Sprühdüsen keiner Beschränkung. Derartigen Düsen kann die zu versprühende Flüssigkeit unter Druck zugeführt werden. Die Zerteilung der zu versprühenden Flüssigkeit erfolgt dabei dadurch, dass sie nach Erreichen einer bestimmten Mindestgeschwindigkeit in der Düsenbohrung entspannt wird.

Bei Verwendung mehrerer Sprühdüsen ist die Anordnung gemäß der Dreiecksteilung bevorzugt. Dreiecksteilung bedeutet, dass sich die Sprühdüsen an den Eckpunkten gedachter gleichseitiger Dreiecke befinden.

Erfindungsgemäß bevorzugt sind Vollkegeldüsen. Darunter sind solche mit einem Öffnungswinkel des Sprühkegels von 15 bis 90° bevorzugt. Besonders bevorzugt sind Öffnungswinkel von 30 bis 70°. Der sich beim Versprühen einstellende mittlere Tropfendurchmesser ist erfindungsgemäß typischerweise kleiner 1000 µm, vorzugsweise kleiner 500 µm, bevorzugt kleiner 200 µm, sowie üblicherweise größer 10 µm, vorzugsweise größer 20 µm, bevorzugt größer 50 µm, und kann nach üblichen Methoden, wie Lichtstreuung, oder anhand der bei den Düsenherstellern erhältlichen Kennlinien bestimmt werden. Der Durchsatz je Sprühdüse beträgt zweckmäßig 0,1 bis 10 m³/h, häufig 0,5 bis 5 m³/h.

Der sich beim Versprühen einstellende Tröpfchendurchmesser ist zweckmäßig von 10 bis 1.000 µm, bevorzugt von 10 bis 500 µm, besonders bevorzugt von 10 bis 150 µm.

Der Reaktionsraum des Polymeriationsreaktors kann im Überdruck oder im Unterdruck durchgeführt werden, ein Unterduck von bis zu 100 mbar gegenüber dem Umgebungsdruck ist bevorzugt.

Die Reaktion wird vorzugsweise in Gegenwart eines inerten Trägergases durchgeführt werden, wobei das Trägergas die Summe der dem Reaktor zugeführten Gasströme ist. Inert bedeutet, dass das Trägergas mit den Bestandteilen der Monomerlösung nicht reagieren kann. Das inerte Trägergas ist vorzugsweise Stickstoff. Der Sauerstoffgehalt des inerten Trägergases beträgt vorteilhaft unter 5 Vol.-%, vorzugsweise unter 2 Vol.-%, besonders bevorzugt unter 1 Vol.-%.

Das inerte Trägergas kann im Gleichstrom oder im Gegenstrom zu den frei fallenden Tropfen der Monomerlösung durch den Reaktionsraum geführt werden, bevorzugt im Gleichstrom. Vorzugsweise wird das Trägergas nach einem Durchgang zumindest teilweise, bevorzugt zu mindestens 50%, besonders bevorzugt zu mindestens 75%, als Kreisgas in den Reaktionsraum zurückgeführt. Üblicherweise wird eine Teilmenge des Trägergases nach jedem Durchgang ausgeschleust, vorzugsweise weniger als 10%, besonders bevorzugt weniger als 3%, ganz besonders bevorzugt weniger als 1 %.

Die Gasgeschwindigkeit wird vorzugsweise so eingestellt, dass die Strömung im Reaktor gerichtet ist, beispielsweise liegen keine der allgemeinen Strömungsrichtung entgegengesetzte Konvektionswirbel vor, und beträgt beispielsweise 0,02 bis 1.5 m/s, bevorzugt 0,05 bis 0.5 m/s.

Das Trägergas wird üblicherweise vor dem Reaktor auf die Reaktionstemperatur von 70 bis 250°C, vorzugsweise 100 bis 220°C, besonders bevorzugt 120 bis 200°C, vorgewärmt. Werden verschiedene Gasströme als Trägergas verwendet, so kann es zweckmäßig sein auch Gasströme niedrigerer Temperatur zu verwenden.

Die Trocknungsgeschwindigkeit kann über den Wasserdampfgehalt des Trägergases beeinflusst werden.

Das Reaktionsabgas, d.h. das den Reaktionsraum verfassende Trägergas, kann beispielsweise in einem Wärmeaustauscher abgekühlt werden. Dabei kondensieren Wasser und nicht umgesetztes Monomer. Danach kann das Reaktionsabgas zumindest teilweise wieder aufgewärmt und als Kreisgas in den Reaktor zurückgeführt werden. Vorzugsweise wird das Kreisgas so abgekühlt, dass das abgekühlte Kreisgas den für die Reaktion gewünschten Anteil an Wasserdampf hat. Ein Teil des Reaktionsabgases kann ausgeschleust und durch frisches Trägergas ersetzt werden, wobei im Reaktionsabgas enthaltene nicht umgesetzte Monomere abgetrennt und rückgeführt werden können.

Besonders bevorzugt ist ein Wärmeverbund, dass heißt, ein Teil der Abwärme beim Abkühlen des Abgases wird zum Aufwärmen des Kreisgases verwendet.

Die Reaktoren können begleitbeheizt werden. Die Begleitheizung wird dabei so eingestellt, dass die Wandtemperatur mindestens 5°C oberhalb der Reaktorinnentemperatur liegt und die Kondensation an den Reaktorwänden zuverlässig vermieden wird.

Das Reaktionsprodukt kann dem Reaktor in üblicher Weise entnommen werden, vorzugsweise am Boden über eine Förderschnecke, und gegebenenfalls bis zur gewünschten Restfeuchte und zum gewünschten Restmonomerengehalt getrocknet werden, beispielsweise in einer integrierten Wirbelschicht.

Gemäß dem erfindungsgemäßen Verfahren werden vorzugsweise wasserabsorbierende Polymerpartikel hergestellt.

Wasserabsorbierende Polymerpartikel können durch Polymerisation einer Monomertösung, enthaltend
a) mindestens ein ethylenisch ungesättigtes, säuregruppentragendes Monomer,
b) mindestens einen Vernetzer,
c) gegebenenfalls ein oder mehrere mit dem Monomeren a) copolymerisierbare ethylenisch und/oder allylisch ungesättigte Monomere und
d) gegebenenfalls ein oder mehrere wasserlösliche Polymere, auf die die Monomere a), b) und ggf. c) zumindest teilweise aufgepfropft werden können,

### hergestellt werden.

Geeignete Monomere a) sind beispielsweise ethylenisch ungesättigte Carbonsäuren, wie Acrylsäure, Methacrylsäure, Maleinsäure, Fumarsäure und Itaconsäure, oder deren Derivate, wie Acrylamid, Methacrylamid, Acrylsäureester und Methacrylsäureester. Besonders bevorzugte Monomere sind Acrylsäure und Methacrylsäure. Ganz besonders bevorzugt ist Acrylsäure.

Die Säuregruppen der Monomere a) sind üblicherweise teilweise neutralisiert, vorzugsweise zu 25 bis 85 mol-%, bevorzugt zu 27 bis 80 mol-%, besonders bevorzugt zu 27 bis 30 mol-% oder 40 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen. Üblicherweise wird die Neutralisation durch Einmischung des Neutralisationsmittels als wässrige Lösung, als Schmelze, oder bevorzugt auch als Feststoff in die Monomerlösung erreicht. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 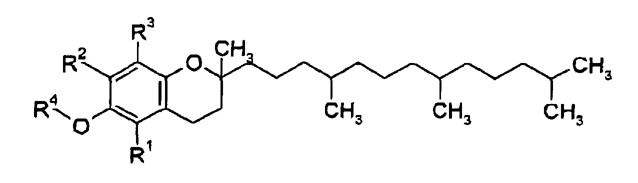 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha―Tocopherol. R^{T} ist besonders bevorzugt Wasserstoff oder Acetyl. Insbesondere bevorzugt ist RRR-alpha-Tocvpherol.

Die Monomerlösung enthält bevorzugt weniger als 130 Gew.-ppm, besonders bevorzugt weniger als 70 Gew.-ppm, bevorzugt mindesten 50 Gew.-ppm, besonders bevorzugt mindesten 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt wird. Beispielsweise kann zur Herstellung der Monomerlösung eine Acrylsäure mit einem entsprechenden Gehalt an Hydrochinonhalbether verwendet werden.

Die Vernetzer b) sind Verbindungen mit mindestens zwei polymerisierbaren Gruppen, die in das Polymemetzwerk radikalisch einpolymerisiert werden können. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP-A-0 530 438 beschrieben, Di- und Triacrylate, wie in EP-A-0 547 847, EP-A-0 559 476, EP-A-0 632 068, WO-A-93/21237, WO-A-03/104299, WO-A-03/104300, WO-A-03/104301 und in DE-A-103 31 450 beschrieben, gemischte Acrylate, die neben Acrylatgruppen weitere ethylenisch ungesättigte Gruppen enthalten, wie in DE-A-103 314 56 und der älteren deutschen Anmeldung mit dem Aktenzeichen 10355401.7 beschrieben, oder Vemetzermischungen, wie beispielsweise in DE-A-195 43 368. DE-A-196 46 484, WO-A-90/15830 und WO-A-02/32962 beschrieben.

Geeignete Vernetzer b) sind insbesondere N.N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP-A-0 343 427 beschrieben sind. Weiterhin geeignete Vernetzer b) sind Pentaerythrituldi- Pentaerythritottri- und Pentaerythritoltetraallylether, Polyethylenglykolcliallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte PolyethylenglyKol ein Molekulargewicht zwischen 300 und 1000 aufweist.

Besonders vorteilhafte Vernetzer b) sind jedoch Di- und Triacrylate des 3- bis 15-fach ethoxylierten Glyzerins, des 3- bis 15-fach ethoxylierten Trimethylolpropans, des 3- bis 15-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxyfierten Glyzerins oder Trimethylolpropans, des 15-fach ethoxylierten Glyzerins oder Trimethylolpropans, sowie des 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten propoxylierten Glyzerine wie sie beispielsweise in WO-A-03/104301 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3- bis 5-fach ethoxylierten und/oder propvxylierten Glyzerins. Diese zeichnen sich durch besonders niedrige Restgehalte (typischerweise unter 10 Gew.-ppm) im wasserabsorbierenden Polymer aus und die wässrigen Extrakte der damit hergestellten wasserabsorbierenden Polymere weisen eine fast unveränderte Oberflächenspannung (typischerweise mindestens 0,068 N/m) im Vergleich zu Wasser gleicher Temperatur auf.

Mit den Monomeren a) copolymerisierbare ethylenisch ungesättigte Monomere c) sind beispielsweise Acrylamid, Methacrylamid, Crotonsäureamid, Dimethylamincethylmethacrylat, Dimethylaminoethylacrylat, Dimethylaminopropylacrylat, Diethylaminopropylacrylat, Dimethytaminobutylacrylat, Dimethylaminoethylmethacrylat, Diethylaminoethylmethacrylat, Dimethylaminoneopentylacrylat und Dimethylaminvtleopentylmethacrylat.

Als wasserlösliche Polymere d) können Polyvinylalkohol, Polyvinylpyrrolidon, Stärke, Stärkederivate, Polyglykole oder Potyacrylsäuren, vorzugsweise Polyvinylalkohol und Stärke, eingesetzt werden.

Die Konzentration der Monomeren a) in der Monomerlösung beträgt üblicherweise 2 bis 80 Gew.-%, vorzugsweise 5 bis 70 Gew.-%, besonders bevorzugt 10 bis 60 Gew.-%.

Die Löslichkeit der Monomeren a) in Wasser beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 50 g/100 g Wasser.

Die bevorzugten Polymerisationsinhibitoren benötigen für eine optimale Wirkung gelösten Sauerstoff. Daher können die Polymerisationsinhibitoren vor der Polymerisation durch Inertisierung, d.h. Durchströmen mit einem inerten Gas, vorzugsweise Stickstoff, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, gesenkt.

Die Monomeren werden in wässriger Lösung in Gegenwart von Initiatoren miteinander polymerisiert.

Die Initiatoren werden in üblichen Mengen eingesetzt, beispielsweise in Mengen von 0,001 bis 5 Gew.-%, vorzugsweise 0,01 bis 1 Gew.-%, bezogen auf die zu polymerisierenden Monomere.

Als Initiatoren können sämtliche unter den Polymerisationsbedingungen in Radikale zerfallende Verbindungen eingesetzt werden, beispielsweise Peroxide. Hydroperoxide, Wasserstoffperoxid, Persulfate, Azoverbindungen und die sogenannten Redox-Initiatoren. Bevorzugt ist der Einsatz von wasserlöslichen Initiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Geeignete organische Peroxide sind beispielsweise Acetytacetonperoxid. Methylethylketonperoxid, tert.-Butylhydroperoxid, Cumolhydroperoxid, tert.-Amylperpivalat, tert.-Butylperpivalat, tert.-Butylpemeohexanoat, tert.-Butylperisobutyrat, tert-Butyl-per-2-ethylhexanoat, tert.-Butylperisononanoat, tert.-Butylpermaleat, tert.-Butylperbenzaat, Di-(2-ethylhexyl)peroxydicarbonat, Dicyclohexylperoxydicarbunat, Di-(4-tert.-butylcyclohexyl)peroxydicarbonat. Dimyristilperoxydicarbonat, Diacetylperoxydicarbonat, Allylperester, Cumylperoxyneodecanoat, tert.-Butylper-3,5,5-trimethylhexanoat, Acetylcyclohexylsulfonylperoxid, Dilaurylperoxid, Dibenzoylperoxid und tert.-Amylperneodekanoat.

Bevorzugte Initiatoren sind Azoverbindungen, beispielsweise 2,2'-Azobis-isvbutyronitril, 2,2'-Azobis(2,4-dimethylvaleronitril) und 2,2'-Azubis(4-methoxy-2,4-dimethylvaleronitril), insbesondere wasserlösliche Azostarter, beispielsweise 2.2'-Azobis{2-[1-(2-hydroxyethyl)-2-imidazolin-2-yl]propan}dihydrochlorid, 2,2'-Azobis-(2-amidinopropan)dihydrochtorid, 2,2'-Azobis[2-(2-imidazolin-2-yl)propan]dihydrochlorid und 2,2'-Azobis[2-(5-methyl-2-imidazolin-2-yl)propan]dihydrochlorid. Ganz besonders bevorzugt sind 2,2'-Azobis[2-(2-imidazolin-2-yl)propan]dihydrochlarid und 2,2'-Azobis[2-(5-methyl-2-imidazolirl-2-yl)propan]dihydrochlorid.

Weiterhin bevorzugte Initiatoren sind außerdem Redox-Initiatoren. Die Redox-Initiatoren enthalten als oxidierende Komponente mindestens eine der oben angegebenen Peroxoverbindungen und als reduzierende Komponente beispielsweise Ascorbinsäure. Glukose, Sorbose, Ammonium- oder Atkalimetaiihydrogensutfit, -sulfit, - thiosulfat, -hyposulfit, -pyrosulfit, -sulfid oder Natriumhydroxymethylsulfoxyiat. Vorzugsweise verwendet man als reduzierende Komponente des Redox-Initiators Ascorbinsäure oder Natriumpyrosulfit. Bezogen auf die bei der Polymerisation eingesetzte Menge an Monomeren verwendet man beispielsweise 1 x 10⁻⁵ bis 1 mol-% der reduzierenden Komponente des Redox-Initiators.

Besonders bevorzugt wird die Polymerisation durch Einwirkung energiereicher Strahlung ausgelöst, wobei man üblicherweise sogenannte Photo-Initiatoren als Initiator verwendet. Hierbei kann es sich beispielsweise um sogenannte a-Spalter, H-abstrahierende Systeme oder auch um Azide handeln. Beispiele für solche Initiatoren sind Benzophenon-Derivate wie Michters-Keton. Phenanthren-Derivate, Fluvren-Derivate, Anthrachinon-Derivate, Thioxanton-Derivate, Cumarin-Derivate. Benzoinether und deren Derivate, Azoverbindungen, wie die oben genannten Radikalbildner, substituierte Hexaarylbisimidazole oder Acylphosphinoxide, insbesondere 2-Hydroxy-2-methylpropiophenon (Darocure® 1173). Beispiele für Azide sind 2-(N,N-Dimethylamino)-ethyl-4-azidocinnamat. 2-(N,N-Dimethyl-amino)-ethyl-4-azidonaphthylketon, 2-(N,N-Dimethylamino)-ethyl-4-azidobenzoat, 5-Azido-1-naphthyl-2'-(N.N-dimethylamino)ethylsulfon, N-(4-Sulfonylazidophenyl)maleinimid, N-Acetyl-4-sulfonylazidoanilin, 4-Sulfonylazidoanilin, 4-Azidoanilin, 4-Azidophenacylbromid, p-Azidobenzoesäure, 2,6-Bis(p-azidobenzyliden)cyclohexanon und 2,6-Bis-(p-azido-benzyliden)-4-methylcyclohexanon.

Besonders bevorzugte Initiatoren sind Azo-Initiatoren, wie 2,2'-Azobis[2-(2-imidazolin-2-yl)propan]dihydrochlorid und 2,2'-Azobis[2-(5-methyl-2-imidazolin-2-yl)propan]djhydrochlorid, und Photo-Initiatoren, wie 2-Hydroxy-2-methylpropivphenon und 1-[4-(2-Hydroxyethoxy)-pheny]-2-hydroxy-2-methyM-propan-1-on. Redox-Initiatoren, wie Natriumpersulfat/ Hydroxymethylsulfinsäure, Ammoniumperoxodisulfat/Hydroxymethylsulfinsäure, Wasserstoffperoxid/Hydroxymethylsulfinsäure, Natriumpersulfat/Ascorbinsäure, Ammoniumperoxodisulfat/Ascorbinsäure und Wasserstoffperoxid/Ascorbinsäure, Photo-Initiatoren, wie 1-[4-(2-Hydroxyethoxy)-phenyl]-2-hydroxy-2-methyl-1-propan-1-on, sowie deren Mischungen.

Die Polymerisationsgeschwindigkeit kann durch Art und Menge des verwendeten Initiatorsystems eingestellt werden.

Entsprechend der Produktanforderungen kann der pH-Wert des erfindungsgemäßen Polymeren über den pH-Wort der Monomerlösung auf den gewünschten Bereich eingestellt werden. Beispielsweise sollten Polymere für kosmetische Anwendungen üblicherweise einen pH-Wert von 5 bis 6 aufweisen.

Die gemäß dem erfindungsgemäßen Verfahren herstellbaren wasserabsorbierenden Polymerpartikel weisen typischerweise eine Zentrifugenretentionskapazität (CRC) von mindestens 15 g/g, vorzugsweise mindestens 20 g/g, besonders bevorzugt mindestens 25 g/g, auf. Die Zentrifugenretentionskapazität (CRC) wird gemäß der von der EDANA (European Disposables and Nonwovens Association) empfohlenen Testmethode Nr. 441.2-02 "Centrifuge retention capacity" bestimmt.

Die gemäß dem erfindungsgemäßen Verfahren herstellbaren wasserabsorbierenden Polymerpartikel weisen typischerweise eine Absorption unter Druck 0.3 psi (2,07 kPa) von mindestens 1o g/g, vorzugsweise mindestens 15 g/g, besonders bevorzugt mindestens 20 g/g, auf. Die Absorption unter Druck (AUL) wird gemäß der von der EDANA (European Disposables and Nonwovens Association) empfohlenen Testmethode Nr. 442.2-02 "Absorption under pressure" bestimmt.

Ein weiterer Gegenstand der vorliegenden Erfindung sind Verfahren zur Herstellung von Hygieneartikeln, insbesondere Windeln, umfassend die Verwendung gemäß dem erfindungsgemäßen Verfahren hergestellter wasserabsorbierender Polymerpartikel.

Ein weiterer Gegenstand der vorliegenden Erfindung sind Hygieneartikel, enthaltend eine absorbierende Schicht bestehend aus 50 bis 100 Gew.-%, vorzugsweise 60 bis 100 Gew.-%, bevorzugt 70 bis 100 Gew.-%, besonders bevorzugt 80 bis 100 Gew.%, ganz besonders bevorzugt 90 bis 100 Gew.-%, erfindungsgemäßer wasserabsorbierender Polymerpartikel, wobei die Umhüllung der absorbierenden Schicht selbstverständlich nicht berücksichtigt ist.

Ein weiterer Gegenstand der vorliegende Erfindung sind Sprühdüsen, bestehend aus
i) einer zentralen Zuführung mit einem innendurchmesser d₁,
ii) einer die zentrale Zuführung i), vorzugsweise koaxial, umhüllenden Zuführung mit einem Innendurchmesser d₂ und
iii) einer an die Zuführungen i) und ii) anschließenden Verbindung zum Düsenmund,
wobei das Verhältnis der Innendurchmesser d₁/d₂ von mindestens 0,8, vorzugsweise mindestens 0,85, besonders bevorzugt mindestens 0.9, und der Winkel β₂ der Verbindung zwischen Zuführung ii) und Verbindung iii) weniger als 45°, vorzugsweise weniger als 30°, besonders bevorzugt weniger als 15° beträgt.

Die Figur 1 zeigt eine erfindungsgemäße Sprühdüse. Die bevorzugten Abmessungen wurden bereits oben beim Verfahren beschrieben.

In einer bevorzugten Ausführungsform ist die Zuführung i) in eine zentrale Zuführung i₁) und eine die Zuführung i₁), vorzugsweise koaxial, umhüllende Zuführung i₂) unterteilt.

Die Figur 2 zeigt eine bevorzugte erfindungsgemäße Sprühdüse. Die bevorzugten Abmessungen wurden bereits oben beim Verfahren beschrieben.

Ein weiterer Gegenstand der vorliegende Erfindung sind Reaktoren, enthaltend
i) mindestens eine Vorrichtung zum Vertropfen oder Versprühen einer Monomenösung a),
ii) mindestens eine Vorrichtung zur Zufuhr eines Gasstromes b) und
iii₁) mindestens eine Vorrichtung zum Versprühen einer von der Monomerlösung a) verschiedenen Flüssigkeit c₁) und/oder
iii₂) mindestens eine Vorrichtung zur Zufuhr eines weiteren Gasstromes c₂), der von dem Gasstrom b) verschieden ist,
wobei die Vorrichtungen i), ii) und iii) voneinander räumlich getrennt sind.

Vorteilhaft werden mehrere Vorrichtungen iii₁) und/oder iii₂) gleichmäßig verteilt um die Vorrichtung i) angeordnet, beispielsweise mit gleichem Abstand zueinander auf einem Kreis mit der Vorichtung i) im Kreismittelpunkt. Besonders bevorzugt wird jede Vorrichtung i) von zwei, drei, vier oder mehr Vorrichtungen iii₁) und/oder iii₂) umgeben.

Vorzugsweise enthält der obere Abschnitt des erfindungsgemäßen Reaktors Leitbleche, so dass das Gas b) an einer Durchmischung mit der vertropften oder versprühten FlüssigKeit a) gehindert wird und die Flüssigkeit c₁) und/oder das Gas c₂) an einer Durchmischung mit der versprühten Flüssigkeit a) nicht gehindert wird.

Die Figuren 3 bis 6 zeigen erfindungsgemäße Reaktoren. Die bevorzugten Abmessungen wurden bereits oben beim Verfahren beschrieben.

Die erfindungsgemäßen Sprühdüsen und Reaktoren werden zur Herstellung von Polymerpartikeln, vorzugsweise wasserabsorbierenden Polymerpartikein eingesetzt.

Zur Bestimmung der Güte der Nachvemetzung werden die getrocknete wasserabsorbierenden Polymerpartikel mit den nachfolgend beschrieben Testmethoden geprüft.

### Methoden:

Die Messungen sollten, wenn nicht anders angegeben, bei einer Umgebungstemperatur von 23 ± 2 °C und einer relativen Luftfeuchte von 50 ± 10 % durchgeführt werden. Die wasserabsorbierenden Polymere werden vor der Messung gut durchmischt.

### Restmonomere

Der Gehalt an Restmonomeren der wasserabsorbierenden Polymerpartikel wird gemäß der von der EDANA (European Disposables and Nonwovens Association) empfohlenen Testmethode Nr. 410.2-02 "Residual monomers" bestimmt.

Analog können Restmonomerengehalte anderer Polymerpartikel bestimmt werden. Dabei muss das zu bestimmende Monomer in dem zur Bestimmung verwendeten Lösungsmittel löslich sein.

Die EDANA-Testmethoden sind beispielsweise erhältlich bei der European Disposables and Nonwovens Association, Avenue Eugène Plasky 157. B-1030 Brüssel, Belgien.

### Beispiele:

### Beispiele 1 bis 3 (Vergleich)

Eine Lösung, enthaltend 8,1 Gew.-% Acrylsäure, 31,9 Gew.-% Natriumacrylat, 0,16 Gew.-% 15fach ethoxyliertes Trimethylolpropantriacrylat, Redox-Initiator und Wasser, wurde in einer Menge von 20 kg/h in einem Sprühturm (8m Höhe, 3m Breite) verdüst. Die Monomerlösung wurde über eine auf 10°C gekühlte Leitung einer Einstoffsprühdüse (Nubilosa PHKS 4-20, Nubilosa, DE) zugeführt. Die Düse hatte einen Innendurchmesser von 400 µm, der Düsenvordruck betrug 10 bar und der mittlere Tropfendurchmesser betrug ca. 100 µm. Dem Sprühturm wurden von oben 1000 kg/h Stickstoff mit einer Temperatur von 175°C zugeführt. Am Boden des Sprühturms wurde ein trockenes, weißes Pulver erhalten.

Als Redox-Initiator wurde ein Gemisch aus Natriumpersulfat und Brüggolit® FF6 (Brüggeman Chemical, DE) eingesetzt. Brüggolit® FF6 ist ein Gemisch aus 50 bis 60 Gew.-% des Dinatriumsalzes der 2-Hydroxy-2-sulfinatoessigsäure, 30 bis 35 Gew.-% Natriumsulfit und 10 bis 15 Gew.-% des Dinatriumsalzes der 2-Hydroxysulfonatoessigsäure.

Von dem erhaltenen Produkt wurde der Restmonomerengehalt bestimmt. Die Versuchsbedingungen und die Ergebnisse sind in der Tabelle 1 zusammengefasst.

**Tab. 1: Einstoffsprühdüse**

| Beispiel | Natriumpersulfat | Brüggolit® FF6 | Restmonomerengehalt |
|---|---|---|---|
| 1 | 1,05 Gew.-% | 0,78 Gew.-% | 24,8 Gew.-% |
| 2^{*)} | 1,76 Gew.-% | 1,51 Gew.-% | 8,3 Gew.-% |
| 3^{**)} | 3,76 Gew.-% | 2,87 Gew.-% | 4,1 Gew.-% |

| | | | |
|---|---|---|---|
| *) instabiler Sprühdüsenvordruck **) nach ca. 30 Minuten Sprühdüse verstopft | | | |

### Beispiele 4 und 5

Es wurde verfahren wie unter Beispiel 2 und 3. Es wurde eine erfindungsgemäße Sprühdüse (Figur 1) verwendet. Die Sprühdüse hatte folgende Maße: d₁= 7,7 mm, d₁*= 8,2 mm, d₂= 9 mm, d₃= 4 mm, L₁= 18 mm, L₂= 4,5 mm, L₃= 9 mm, β₁= 8,7° und β₂= 9,1°. Zur Ausbildung der laminaren Flüssigkeitsschicht wurden 2 kg/h Wasser dosiert. Die erfindungsgemäße Sprühdüse ließ sich über mehrere Stunden stabil betreiben.

Von dem erhaltenen Produkt wurde der Restmonomerengehalt bestimmt. Die Versuchsbedingungen und die Ergebnisse sind in der Tabelle 2 zusammengefasst.

**Tab. 2: erfindungsgemäße Sprühdüse**

| Beispiel | Natriumpersulfat | Brüggolit® FF6 | Restmonomerengehalt |
|---|---|---|---|
| 4 | 1,76 Gew.-% | 1,51 Gew.-% | 7,9 Gew.-% |
| 5 | 3,76 Gew.-% | 2,87 Gew.-% | 3,8 Gew.-% |

### Beispiel 6

Es wurde verfahren wie unter Beispiel 2. Über vier symmetrisch angeordnete Dampflanzen wurden insgesamt 72 kg/h Dampf mit einer Temperatur von 100 bis 110°C eingespeist (relative Feuchte >98%). Die Dampflanzen hatten einen Innendurchmesser von je 1 mm und einen Abstand von der Einstoffsprühdüse von 15 cm. Die Sprühachse der Dampflanzen war gegenüber der Senkrechten um 15° zur Einstoffsprühdüse geneigt.

Der Restmonomerengehalt betrug 1,3 Gew.-%.

### Beispiel 7 (Vergleich)

Eine Lösung, enthaltend 8,1 Gew.-% Acrylsäure, 31,9 Gew.-% Natriumacrylat, 0,16 Gew.-% 15fach ethoxyliertes Trimethylolpropantriacrylat, 0,22 Gew.-% Azo-Initiator und Wasser, wurde in einer Menge von 15 kg/h in einem Sprühturm (8m Höhe. 3m Breite) verdüst. Die Monomerlösung wurde über eine auf 10°C gekühlte Leitung einer Zweistoffdüse (Nubilosa 2B2V ZD100, Nubilosa, DE) zugeführt. Die Düse wurde mit 10 Nm³/h Stickstoff als Zerstäubergas betrieben und der mittlere Tropfendurchmesser betrug ca. 50 µm. Dem Sprühturm wurden von oben 1000 kg/h Stickstoff mit einer Temperatur von 175°C zugeführt. Am Boden des Sprühturms wurde ein trockenes, weißes Pulver erhalten.

Als Azo-Initiator wurde ein Gemisch aus gleichen Gewichtsteilen 2,2'-Azobis(N,N'-dimethylenisobutyramidine)dihydrochlorid (Azo-Initiator V44 der Wako Deutschland, DE) und 2,2'-Azobis(2-amidinopropan)dihydrochlorid (Azo-Initiator V50 der Wako Deutschland, DE) eingesetzt.

Der Restmonomerengehalt betrug 16,1 Gew.-%.

### Beispiel 8

Es wurde verfahren wie unter Beispiel 7. Statt Stickstoff wurde Wasserdampf (relative Feuchte >98%) mit einer Temperatur von 100 bis 110°C als Zerstäubergas verwendet.

Der Restmonomerengehalt betrug 7,1 Gew.-%.

## Patentansprüche

1. Verfahren zur Herstellung von Polymerpartikein mit niedrigem Restmonomerengehalt durch Sprühpolymerisation einer Monomenösung, **dadurch gekennzeichnet, dass** in einer Flüssigphase und/oder in einer Gasphase über die Dosierung unterschiedlicher flüssiger und/oder gasförmiger Stoffströme gezielt Konzentrationsunterschiede erzeugt werden.

2. Verfahren gemäß Anspruch 1, **dadurch gekennzeichnet, dass** sich zwischen Monomerlösung und Innenwand der Sprühdüse eine laminar strömende Flüssigkeitsschicht ausbildet, wobei die laminar strömende Flüssigkeitsschicht von der Monomerlösung verschieden ist.

3. Verfahren gemäß Anspruch 2, **dadurch gekennzeichnet, dass** die die laminar strömende Flüssigkeitsschicht ausbildende Flüssigkeit zumindest ein in der Monomerlösung enthaltendes Lösungsmittel enthält.

4. Verfahren gemäß Anspruch 2 oder 3, **dadurch gekennzeichnet, dass** das Massenstromverhältnis von der die laminar strömende Flüssigkeitsschicht ausbildenden Flüssigkeit zu Monomerlösung weniger als 0.2 beträgt.

5. Verfahren gemäß einem der Ansprüche 2 bis 4, **dadurch gekennzeichnet, dass** der die laminar strömende Flüssigkeitsschicht ausbildenden Flüssigkeitsstrom 2 und der zentrale die Monomerlösung enthaltende Flüssigkeitsstrom 1 in der Sprühdüse so zusammengeführt werden, dass die Zuführung des Flüssigkeitsstromes 2 die Zuführung des Flüssigkeitsstromes 1 umhüllt und dass der Flüssigkeitsstrom 2 an der Stelle an der die Flüssigkeitsstrome 1 und 2 zusammengeführt werden und den Flüssigkeitsstrom 3 bilden um weniger als 45° abgelenkt wird.

6. Verfahren gemäß einem der Ansprüche 2 bis 5, **dadurch gekennzeichnet, dass** das Verhältnis der Austrittsgeschwindigkeiten von dem die laminar strömende Flüssigkeitsschicht ausbildenden Flüssigkeitsstrom 2 zu dem die Monomerlösung enthaltenden Flüssigkeitsstrom 1 an der Stelle an der die Flüssigkeitstrvme 1 und 2 zusammengeführt werden und den Flüssigkeitsstrom 3 bilden von 0.1 bis 1 beträgt.

7. Verfahren gemäß einem der Ansprüche 2 bis 6, **dadurch gekennzeichnet, dass** die die laminar strömende Flüssigkeitsschicht ausbildende Flüssigkeit Wasser ist.

8. Verfahren gemäß einem der Ansprüche 2 bis 7, **dadurch gekennzeichnet, dass** der die Monomerlösung enthaltende Flüssigkeitsstrom 1 in einen zentralen Flüssigkeitsstrom 1 a und einen Flüssigkeitsstrom 1 b unterteilt wird, wobei die Zuführung des Flüssigkeitstromes 1 b die Zuführung des Flüssigkeitsstromes 1 a umhüllt.

9. Verfahren gemäß Anspruch 8, **dadurch gekennzeichnet, dass** die Flüssigkeitsströme 1a und 1b Monomerlösungen sind, wobei die eine Monomerlösung einen Initiator und die andere Monomerlösung einen Co-Initiator enthält.

10. Verfahren gemäß Anspruch 8, **dadurch gekennzeichnet, dass** einer der beiden Flüssigkeitsströme 1 a oder 1 b Acrylsäure und der andere Flüssigkeitsstrom Natronlauge enthält.

11. Verfahren gemäß einem der Ansprüche 1 bis 10. **dadurch gekennzeichnet, dass** in dem Reaktionsraum gezielt mindestens zwei Gasströme unterschiedlicher Zusammensetzung erzeugt werden.

12. Verfahren gemäß Anspruch 11, **dadurch gekennzeichnet, dass** die mindestens zwei Gasströme unterschiedlicher Zusammensetzung im Bereich der Vertropfung oder Versprühung der Monomerlösung an einer Durchmischung gehindert werden.

13. Verfahren gemäß Anspruch 11 oder 12, **dadurch gekennzeichnet, dass** mindestens ein Gasstrom zumindest eine Komponente der Monomerlösung enthält.

14. Verfahren gemäß Anspruch 13, **dadurch gekennzeichnet, dass** der mindestens eine Gasstrom, der zumindest eine Komponente der Monomerlösung enthält, die vertropfte oder versprühte Monvmerlösung urnhüllt.

15. Verfahren gemäß Anspruch 13 oder 14, **dadurch gekennzeichnet, dass** die zumindest eine Komponente der Monomerlösung Wasserdampf ist.

16. Verfahren gemäß Anspruch 15, **dadurch gekennzeichnet, dass** die relative Feuchte des Wasserdampfs enthaltenden Gasstroms mindestens 50% beträgt.

17. Verfahren gemäß einem der Ansprüche 14 bis 16, **dadurch gekennzeichnet, dass** der die vertropfte oder versprühte Monomerlösung umhüllende Gasstrom eine Temperatur von 70 bis 250°C aufweist.

18. Verfahren gemäß einem der Ansprüche 1 bis 17, **dadurch gekennzeichnet, dass** die Monomerlösung
a) mindestens ein ethylenisch ungesättigtes, säuregruppentragendes Monomer,
b) mindestens einen Vernetzer,
c) gegebenenfalls ein oder mehrere mit dem Monomer a) copolymerisierbare ethylenisch und/oder allylisch ungesättigte Monomere und
d) gegebenenfalls ein oder mehrere wasserlösliche Polymere, auf die die Monomere a), b) und ggf. c) zumindest teilweise aufgepfropft werden können,
enthält.

19. Verfahren zur Herstellung von Hygieneartikeln, umfassend die Verwendung gemäß Anspruch 18 hergestellter wasserabsorbierender Polymerpartikel.

20. Sprühdüse, bestehend aus
i) einer zentralen Zuführung mit einem Innendurchmesser d₁.
ii) einer die zentrale Zuführung i) umhüllenden Zuführung mit einem Innendurchmesser d₂ und
iii) einer an die Zuführungen i) und ii) anschließenden Verbindung zum Düsenmund,
wobei das Verhältnis der Innendurchmesser d₁/d₂ mindestens 0,8 und der Winkel β₂ der Verbindung zwischen Zuführung ii) und Verbindung iii) weniger als 45° beträgt

21. Sprühdüse gemäß Anspruch 20, wobei die Zuführung i) in eine zentrale Zuführung i₁) und eine die Zuführung i₁) umhüllende Zuführung i₂) unterteilt ist.

22. Reaktor zur Sprühpolymerisation, enthaltend
i) mindestens eine Vorrichtung zum Vertropfen oder Versprühen einer Monomerlösung a),
ii) mindestens eine Vorrichtung zur Zufuhr eines Gasstromes b) und
iii₁) mindestens eine Vorrichtung zum Versprühen einer von der Monomerlösung a) verschiedenen Flüssigkeit c₁) und/oder
iii₂) mindestens eine Vorrichtung zur Zufuhr eines weiteren Gasstromes c₂), der von dem Gasstrom b) verschieden ist,
wobei die Vorrichtungen i), ii) und iii) voneinander räumlich getrennt sind.

23. Reaktor gemäß Anspruch 22, **dadurch gekennzeichnet, dass** der obere Abschnitt des Reaktors Leitbleche enthält, so dass das Gas b) an einer Durchmischung mit der vertropften oder versprühten Flüssigkeit a) gehindert wird und die Flüssigkeit c₁) und/oder das Gas c₂) an einer Durchmischung mit der versprühten Flüssigkeit a) nicht gehindert wird.

24. Reaktor gemäß Anspruch 23, **dadurch gekennzeichnet, dass** das Verhältnis von Tiefe der Leitbleche zu Abstand der Leitbleche von der nächsten Vorrichtung zum Vertropfen oder Versprühen weniger als 3 beträgt.

25. Reaktor gemäß einem der Ansprüche 22 bis 24, **dadurch gekennzeichnet, dass** die zugeführten Gase und Flüssigkeiten a), b) und c) im Gleichstrom von oben nach unten durch den Reaktor geführt werden können

26. Verwendung einer Vorrichtung gemäß einem der Ansprüche 20 bis 25 zur Herstellung von Polymerpartikeln.
